# EUROPEAN PATENT APPLICATION

(11) **EP 4 104 927 A2**
(43) Date of publication of application: **21.12.2022**
(21) Application number: 21754028.5
(22) Date of filing: 09.02.2021
(51) Int. Cl.: B01J 37/02, B01J 35/02, B01J 23/44, C01B 3/04

(54) **HYDROGEN GENERATION REACTION CATALYST COMPRISING DENDRIMER-ENCAPSULATED NANOPARTICLES**

(30) Priority: 13.02.2020 KR 20200017818; 08.02.2021 KR 20210017905
(71) Applicant: UNIVERSITY-INDUSTRY COOPERATION GROUP OF KYUNG HEE UNIVERSITY, Yongin-si, Gyeonggi-do 17104 (KR)
(72) Inventor: KIM, Joohoon, Seoul 06701 (KR); JU, Youngwon, Namyangju-si Gyeonggi-do 12081 (KR)
(74) Representative: Beck & Rössig European Patent Attorneys
(86) International application number: PCT/KR2021/001708
(87) International publication number: WO 2021/162409

(57) **Abstract**

An embodiment of the present invention provides a hydrogen production reaction catalyst reducing the activation energy of hydrogen production reaction, comprising: a dendrimer and nanoparticles encapsulated in the dendrimer, wherein the nanoparticles are made of an alloy of platinum and palladium, and a catalyst composite comprising the same.

## Description

### Technical field

The present specification relates to a hydrogen production reaction catalyst comprising dendrimer-encapsulated nanoparticles and a catalyst composite comprising the same.

### Background art

As a promising one of general-purpose methods for synthesizing nanoparticles of a defined size, composition and structure, various nanoparticle systems prefer the use of dendrimer templates. The method for synthesizing nanoparticles using a dendrimer template generally involves two steps, namely, a step in which metal ions are complexed in the dendrimer to form a composite, and a step in which the complexed ions in the composite are reduced to form nanoparticles (NP). These types of nanoparticles, generally referred to as dendrimer-encapsulated nanoparticles (DENs), provide significant advantages over other types of nanoparticles, primarily due to the desirable function of dendrimers.

The size and composition of DENs may be precisely controlled by selecting the ratio and type of metal ions complexed in the dendrimer. Further, the structure of DENs may be controlled by regulating the complexation and reduction processes of metal ions inside the dendrimer. In addition, dendrimers not only have control over the solubility and catalyst selectivity of DENs, but also stabilize the encapsulated nanoparticles with minimal passivation of the catalytic nanoparticle surface.

DENs may implement unique advantages in a range where their size is smaller than 2 nm. Nanoparticles rapidly change their physicochemical properties even with changes in sub-nanometer size. Therefore, DENs are attracting attention in various fields including drug delivery, sensors and catalytic action.

However, there is a fixed number of complexing sites in the dendrimer, which limits the number of metal ions that may be complexed inside the dendrimer during the synthesis of DENs. Therefore, the number of metal atoms in DENs is generally limited to less than 250, which narrows the scope of application of DENs. Since the number of complexation sites depends on the number of generations of dendrimers, the synthesis of large DENs containing 250 atoms or more requires a higher generation dendrimer such as generation 9 polyamidoamine (PAMAM) dendrimer. However, in the case of higher generation dendrimers, their use is limited due to a very large internal volume, high density of end groups, and high cost of higher generation dendrimers.

In this regard, a method for improving catalytic activity by increasing the number of metal atoms of DENs has been studied. However, more excellent catalysts may be prepared if a method for improving catalytic activity by including the same amount of metal atoms while maintaining a similar size or a method for improving catalytic activity by supporting DENs on a support is developed.

### Detailed description of invention

### Technical task

The description of the present specification is intended to solve the problems of the prior art described above, and it is an object of the present specification to provide a hydrogen production reaction catalyst having improved catalytic activity and a catalyst composite comprising the same.

### Means for solving technical task

According to an aspect, the present invention provides a hydrogen production reaction catalyst reducing the activation energy of hydrogen production reaction, comprising: a dendrimer and nanoparticles encapsulated in the dendrimer, wherein the nanoparticles are made of an alloy of platinum and palladium.

In an embodiment, the dendrimer may be a hydroxyl-terminated polyamidoamine dendrimer.

In an embodiment, the total molar equivalents of the nanoparticle component may be 16~1024 equivalents based on 1 equivalent of the dendrimer.

In an embodiment, the average particle size of the nanoparticles may be 1.0~3.5 nm.

In an embodiment, the average particle size of the nanoparticles may show a monodispersity of 1.65~1.75 nm.

In an embodiment, the molar ratio of the platinum and the palladium may be 1~5:5~1, respectively.

In an embodiment, the molar ratio of the platinum and the palladium may be 1~2:2~1, respectively.

In an embodiment, the turnover frequency (TOF) of the hydrogen production reaction using the catalyst may be 50 mol_{H2}molₐₜₒₘ⁻¹min⁻¹ or more.

In an embodiment, the catalyst may reduce the activation energy of the hydrogen production reaction to 57.5 kJ/mol or less.

In an embodiment, the hydrogen production reaction may be a hydrolytic dehydrogenation reaction of ammonia borane.

According to another aspect, the present invention provides a hydrogen production reaction catalyst composite reducing the activation energy of hydrogen production reaction, comprising: a carbon-based support and a catalyst supported on the carbon-based support, wherein the catalyst comprises: a dendrimer and nanoparticles encapsulated in the dendrimer, wherein the nanoparticles are made of platinum, palladium or an alloy of platinum and palladium.

In an embodiment, the dendrimer may be an amine-terminated polyamidoamine dendrimer.

In an embodiment, the total molar equivalents of the nanoparticle component may be 16~1024 equivalents based on 1 equivalent of the dendrimer.

In an embodiment, the average particle size of the nanoparticles may be 1.0~3.5 nm.

In an embodiment, the carbon-based support may be chemically converted graphenes (CCGs).

In an embodiment, the carbon-based support may be graphene oxide or reduced graphene oxide.

In an embodiment, the molar ratio of the platinum and the palladium included in the alloy may be 1~2:2~1,respectively.

In an embodiment, the turnover frequency (TOF) of the hydrogen production reaction using the catalyst composite may be 90 mol_{H2}molₐₜₒₘ⁻¹min⁻¹ or more.

In an embodiment, the catalyst composite may reduce the activation energy of the hydrogen production reaction to 57.5 kJ/mol or less.

In an embodiment, the hydrogen production reaction may be a hydrolytic dehydrogenation reaction of ammonia borane.

### Effect of invention

The hydrogen production reaction catalyst according to an aspect of the present specification may control or improve catalytic activity by changing only the composition of nanoparticles.

The hydrogen production reaction catalyst composite according to an aspect of the present specification may improve catalytic activity by supporting the catalyst on a support.

The hydrogen production reaction catalyst according to an aspect of the present specification and the catalyst composite comprising the same have excellent dehydrogenation reaction catalytic activity, and thus may be applied to the production of hydrogen fuel used in hydrogen vehicles, etc.

The effect of an aspect of the present specification is not limited to the above-mentioned effects, and it should be understood that the effects of the present invention to include all effects that could be inferred from the configuration described in the detailed description or the claims of the present specification.

### Brief description of drawings

Fig. 1 is a TEM image and a particle size distribution histogram of dendrimer-encapsulated nanoparticles according to an embodiment of the present specification;
Fig. 2 is an HAADF-STEM image and elemental analysis results of dendrimer-encapsulated nanoparticles according to an embodiment of the present specification;
Fig. 3 illustrates an XPS spectrum of dendrimer-encapsulated nanoparticles according to an embodiment of the present specification;
Fig. 4 illustrates an XPS spectrum in the Pt(4f) region and the Pd(3d) region of dendrimer-encapsulated nanoparticles according to an embodiment of the present specification;
Fig. 5 illustrates the content ratio of platinum and palladium with respect to dendrimer-encapsulated platinum-palladium nanoparticles according to an embodiment of the present specification, as measured using ICP-AES;
Fig. 6 is a device for evaluating catalytic activity of the hydrogen production reaction of dendrimer-encapsulated nanoparticles according to an embodiment of the present specification;
Fig. 7 illustrates a time-dependent hydrogen production of dendrimer-encapsulated nanoparticles according to an embodiment of the present specification;
Fig. 8 illustrates a change in TOF value according to the composition ratio of dendrimer-encapsulated nanoparticles according to an embodiment of the present specification;
Fig. 9 illustrates a change in activation energy and an Arrhenius diagram for the hydrogen production reaction of dendrimer-encapsulated nanoparticles according to an embodiment of the present specification;
Fig. 10 is an HRTEM image of dendrimer-encapsulated nanoparticles according to an embodiment of the present specification;
Fig. 11 is a UV-Vis spectrum of the process of synthesizing a dendrimer-encapsulated nanoparticle-graphene oxide composite according to an embodiment of the present specification;
Fig. 12 is a TEM image of a dendrimer-encapsulated nanoparticle-graphene oxide composite and a particle size distribution histogram of dendrimer-encapsulated nanoparticles on graphene oxide according to an embodiment of the present specification;
Fig. 13 illustrates a time-dependent hydrogen production before and after supporting dendrimer-encapsulated nanoparticles on graphene oxide according to an embodiment of the present specification;
Fig. 14 is a change in TOF value before and after supporting dendrimer-encapsulated nanoparticles on graphene oxide according to an embodiment of the present specification;
Fig. 15 is a TEM image and a particle size distribution histogram before and after supporting dendrimer-encapsulated nanoparticles on carbon black according to an embodiment of the present specification;
Fig. 16 is a time-dependent hydrogen production and a change in TOF value according to types of catalyst supports of dendrimer-encapsulated nanoparticles according to an embodiment of the present specification;
Fig. 17 is a thermal stability test result of a dendrimer-encapsulated nanoparticle-graphene oxide composite according to an embodiment of the present specification; and
Fig. 18 is a TEM image and a particle size distribution histogram after heat treatment of a dendrimer-encapsulated nanoparticle-graphene oxide composite according to an embodiment of the present specification.

### Best mode for carrying out the invention

Hereinafter, an aspect of the present specification will be explained with reference to the accompanying drawings. The description of the present specification, however, may be modified in different ways, and should not be construed as limited to the embodiments set forth herein. Also, in order to clearly explain an aspect of the present specification in the drawings, portions that are not related to the explanation are omitted, and like reference numerals are used to refer to like elements throughout the specification.

Throughout the specification, it will be understood that when a portion is referred to as being "connected" to another portion, it can be "directly connected to" the other portion, or "indirectly connected to" the other portion having intervening portions present. Also, when a component "includes" an element, unless there is another opposite description thereto, it should be understood that the component does not exclude another element but may further include another element.

When a range of numerical values is described herein, the value has the precision of the significant figures provided according to the standard rules in chemistry for significant figures, unless a specific range thereof is stated otherwise. For example, 10 includes a range of 5.0 to 14.9 and the number 10.0 includes a range of 9.50 to 10.49.

Hereinafter, an embodiment of the present specification will be described in detail with reference to the accompanying drawings.

### Hydrogen production reaction catalyst

The hydrogen production reaction catalyst according to an aspect of the present specification may comprise a dendrimer and nanoparticles encapsulated in the dendrimer, wherein the nanoparticles are made of an alloy of platinum and palladium, and may reduce the activation energy of the hydrogen production reaction.

The encapsulation means that the nanoparticles are surrounded by branches of the dendrimer having a regular branching structure.

The dendrimer may be an amine-terminated polyamidoamine dendrimer. For example, the dendrimer may be a 2nd generation, 3rd generation, 4th generation, 5th generation, 6th generation, 7th generation, or 8th generation polyamidoamine dendrimer, but is not limited thereto. Nth generation dendrimers may have 2ⁿ⁺² terminal groups. Higher generation dendrimers, which have more terminal groups, have very large internal volume, and high terminal group density, and thus may be uneconomical.

The total molar equivalents of the nanoparticle component may be 16~1024 equivalents based on 1 equivalent of the dendrimer. For example, 30, 60, 90, 120, 150, 180, 210, 240, 270, 300, 330, 360, 390, 420, 450, 480, 510, 550, 600, 650, 700, 750, 800, 850, 900, 950 or 1000 moles of the component may be encapsulated per 1 mole of dendrimer, but the total molar equivalents are not limited thereto. The nanoparticle component may mean a concept including all of a platinum atom, a platinum ion, a palladium atom, and a palladium ion.

The average particle size of the nanoparticles may be 1.0~3.5 nm, or show a monodispersity of 1.65~1.75 nm. As the number of components of the dendrimer-encapsulated nanoparticles increases, the average particle size may increase, and when the particle size of the dendrimer-encapsulated nanoparticles has a precisely controlled monodisperse form, the nanoparticles may be more stabilized.

The molar ratio of the platinum and the palladium may be 1~5:5~1,respectively. For example, the molar ratio of the platinum and the palladium may be 1~2:2~1,respectively. The platinum and the palladium form a bimetallic structure, and thus the activity of the catalyst may be precisely controlled by controlling the molar ratio of the platinum and the palladium configuring the nanoparticles, regardless of the size effect. For example, the molar ratio of the platinum and the palladium may be 30:150, 60:120, 90:90, 120:60, or 150:30, but is not limited thereto.

The turnover frequency (TOF) of the hydrogen production reaction using the catalyst may be 50 mol_{H2}molₐₜₒₘ⁻¹min⁻¹ or more. For example, the TOF may be 50 mol_{H2}molₐₜₒₘ⁻¹min⁻¹, 60 mol_{H2}molₐₜₒₘ⁻¹min⁻¹, 70 mol_{H2}molₐₜₒₘ⁻¹min⁻¹, 80 mol_{H2}molₐₜₒₘ⁻¹min⁻¹, 90 mol_{H2}molₐₜₒₘ⁻¹min⁻¹, 100 mol_{H2}molₐₜₒₘ⁻¹min⁻¹, 110 mol_{H2}molₐₜₒₘ⁻¹min⁻¹ or 120 mol_{H2}molₐₜₒₘ⁻¹min⁻¹, but is not limited thereto.

The catalyst may reduce the activation energy of the hydrogen production reaction to 57.5 kJ/mol or less. For example, the activation energy may be 55 kJ/mol, 52.5 kJ/mol, 50 kJ/mol, or 47.5 kJ/mol, but is not limited thereto.

The hydrogen production reaction means a reaction for producing hydrogen (H₂) through dehydrogenation of a chemical hydrogen storage material. Chemical hydrogen storage materials include solid or liquid organic compounds including hydrogen, or organic-inorganic composites, etc. For example, the chemical hydrogen storage material may be hydrogenated compounds such as methyl-cyclohexane (MCH), N-methylcarbazole, dibenzyltoluene, and ammonia borane, but is not limited thereto.

The hydrogen production reaction may be a hydrolytic dehydrogenation reaction of ammonia borane (AB, NH₃BH₃). The hydrolytic dehydrogenation reaction of ammonia borane using the catalyst may produce 3 moles of hydrogen per 1 mole of ammonia borane. The ammonia borane is attracting attention as a hydrogen storage material due to its high hydrogen capacity of 19.6% by weight, non-toxicity and excellent stability. In particular, hydrolytic dehydrogenation of ammonia borane is a method that can efficiently produce hydrogen in a mild environment, which presents conditions with high hydrogen selectivity in practical applications including fuel cells.

### Hydrogen production reaction catalyst composite

The hydrogen production reaction catalyst composite according to another aspect of the present specification may comprise a carbon-based support and a catalyst supported on the carbon-based support, wherein the catalyst comprises a dendrimer and nanoparticles encapsulated in the dendrimer, wherein the nanoparticles are made of platinum, palladium, or an alloy of platinum and palladium, and may reduce the activation energy of hydrogen production reaction.

The encapsulation means that the nanoparticles are surrounded by branches of the dendrimer having a regular branching structure.

The dendrimer may be an amine-terminated polyamidoamine dendrimer. For example, the dendrimer may be a 2nd generation, 3rd generation, 4th generation, 5th generation, 6th generation, 7th generation, or 8th generation polyamidoamine dendrimer, but is not limited thereto. Nth generation dendrimers may have 2ⁿ⁺² terminal groups. Higher generation dendrimers, which have more terminal groups, have very large internal volume, and high terminal group density, and thus may be uneconomical.

The total molar equivalents of the nanoparticle component may be 16~1024 equivalents based on 1 equivalent of the dendrimer. For example, 30, 60, 90, 120, 150, 180, 210, 240, 270, 300, 330, 360, 390, 420, 450, 480, 510, 550, 600, 650, 700, 750, 800, 850, 900, 950 or 1000 moles of the component may be encapsulated per 1 mole of dendrimer, but the total molar equivalents are not limited thereto. The nanoparticle component may mean a concept including all of a platinum atom, a platinum ion, a palladium atom, and a palladium ion.

The average particle size of the nanoparticles may be 1.0~3.5 nm. As the number of components of the dendrimer-encapsulated nanoparticles increases, the average particle size may increase, and when the particle size of the dendrimer-encapsulated nanoparticles has a precisely controlled monodisperse form, the nanoparticles may be more stabilized.

The difference in particle size of the nanoparticles before and after supporting the catalyst on the carbon-based support may be 1.0 nm or less, 0.9 nm or less, 0.8 nm or less, 0.7 nm or less, 0.6 nm or less, 0.5 nm or less, 0.4 nm or less, 0.3 nm or less, or 0.2 nm or less, but is not limited thereto.

The carbon-based support may be chemically converted graphenes (CCGs). For example, the carbon-based support may be graphene oxide or reduced graphene oxide, but is not limited thereto.

The chemically converted graphenes (CCGs) are graphenes prepared by chemical synthesis. Graphene prepared by chemical synthesis may be synthesized in a large amount and has the advantage of being synthesized at a relatively low cost.

The catalyst composite may be formed by a covalent bond between the amine group at the end of the dendrimer and the epoxy group of the carbon-based support, for example, graphene oxide, so that the dendrimer-encapsulated nanoparticles are uniformly dispersed and fixed on the surface of the carbon-based support.

The molar ratio of platinum and palladium included in the alloy may be 1~2:2~1, respectively. For example, the molar ratio of platinum and palladium included in the alloy may be 60:120, 90:90 or 120:60, but is not limited thereto.

The turnover frequency (TOF) of the hydrogen production reaction using the catalyst composite may be 90 mol_{H2}molₐₜₒₘ⁻¹min⁻¹ or more. For example, the TOF may be 90 mol_{H2}molₐₜₒₘ⁻¹min⁻¹, 100 mol_{H2}molₐₜₒₘ⁻¹min⁻¹, 110 mol_{H2}molₐₜₒₘ⁻¹min⁻¹, 120 mol_{H2}molₐₜₒₘ⁻¹min⁻¹, 130 mol_{H2}molₐₜₒₘ⁻¹min⁻¹, 140 mol_{H2}molₐₜₒₘ⁻¹min⁻¹, 150 mol_{H2}molₐₜₒₘ⁻¹min⁻¹, 160 mol_{H2}molₐₜₒₘ⁻¹min⁻¹, 170 mol_{H2}molₐₜₒₘ⁻¹min⁻¹ or 180 mol_{H2}molₐₜₒₘ⁻¹min⁻¹, but is not limited thereto.

The catalyst composite may reduce the activation energy of the hydrogen production reaction to 57.5 kJ/mol or less. For example, the activation energy may be 55 kJ/mol, 52.5 kJ/mol, 50 kJ/mol, or 47.5 kJ/mol, but is not limited thereto.

Since the catalyst composite has excellent thermal stability, catalytic activity may be maintained or improved without a change in the particle size of the nanoparticles even after heat treatment.

The hydrogen production reaction means a reaction for producing hydrogen (H₂) through dehydrogenation of a chemical hydrogen storage material. Chemical hydrogen storage materials include solid or liquid organic compounds including hydrogen, or organic-inorganic composites, etc. For example, the chemical hydrogen storage material may be hydrogenated compounds such as methyl-cyclohexane (MCH), N-methylcarbazole, dibenzyltoluene, and ammonia borane, but is not limited thereto.

The hydrogen production reaction may be a hydrolytic dehydrogenation reaction of ammonia borane. The hydrolytic dehydrogenation reaction of ammonia borane using the catalyst composite may produce 3 moles of hydrogen per 1 mole of ammonia borane.

Hereinafter, embodiments of the present specification will be described in more detail. However, the following experimental results describe only representative experimental results among the above examples, and the scope and content of the present specification may not be construed as narrowed or limited by the examples. Each effect of the various embodiments of the present specification not explicitly presented below will be specifically described in the corresponding section.

### Examples 1-5: Synthesis of hydrogen production reaction catalyst

Hydrogen production reaction catalyst G6-OH(Pt)ₙ(Pd)₁₈₀₋ₙ was synthesized as follows.

30:150, 60:120, 90:90, 120:60 or 150:30 (corresponding to Example 1, Example 2, Example 3, Example 4 or Example 5, respectively) molar equivalents of 100 mM K₂PtCl₄ aqueous solution and 100 mM K₂PdCl₄ aqueous solution were added to 2 µM of an aqueous solution of hydroxyl-terminated 6th generation polyamidoamine dendrimer (G6-OH). The solution was stirred at room temperature for 72 hours to complex Pt²⁺ precursor ions and Pd²⁺ precursor ions with the internal tertiary amine of G6-OH. Thereafter, a 10-fold excess of a 2 M NaBH₄ aqueous solution of the total molar equivalents of Pt²⁺ and Pd²⁺ was added to a solution of Pt²⁺-Pd²⁺/G6-OH composite (i.e., G6-OH(Pt²⁺)ₙ(Pd²⁺)₁₈₀₋ₙ), and the solution was stored in a sealed vial under stirring for 24 hours to produce a solution of BH₄₋ reduced dendrimer-encapsulated platinum-palladium nanoparticles (G6-OH(Pt)ₙ(Pd)₁₈₀₋ₙ). The resulting solution was dialyzed in distilled water for 24 hours using a nylon membrane filter (MWCO 12,000) to remove impurities, and dendrimer-encapsulated platinum-palladium nanoparticles (G6-OH(Pt)ₙ(Pd)₁₈₀₋ₙ) were obtained.

### Example 6: Synthesis of hydrogen production reaction catalyst composite

Hydrogen production reaction catalyst composite G6-NH₂(Pt)₉₀(Pd)₉₀/GO was synthesized as follows.

HCl was added to 5 µM of an aqueous solution of amine-terminated 6th generation polyamidoamine dendrimer (G6-NH₂) and the pH was set to 5.0 or less. 100 mM K₂PtCl₄ (Pt²⁺) aqueous solution and 100 mM K₂PdCl₄ (Pd²⁺) aqueous solution each corresponding to 90 equivalents of G6-NH₂ were added to G6-NH₂ aqueous solution having a pH of 5.0 or less, and then the mixture was stirred at room temperature for 76 hours. 2 M NaBH₄ aqueous solution corresponding to 20 equivalents of the total molar equivalents of Pt²⁺ and Pd²⁺ was added, and the pH was set to 7 or less using an HCl aqueous solution. Thereafter, Pt²⁺ and Pd²⁺ were reduced for 24 hours to produce a solution of dendrimer-encapsulated platinum-palladium nanoparticles (G6-NH₂(Pt)₉₀(Pd)₉₀). The resulting solution was dialyzed (MWCO 12,000) in distilled water for 24 hours to remove impurities, and dendrimer-encapsulated platinum-palladium nanoparticles (G6-NH₂(Pt)₉₀(Pd)₉₀) were obtained.

10 mL of a 1 µM aqueous solution of dendrimer-encapsulated platinum-palladium nanoparticles (G6-NH₂(Pt)₉₀(Pd)₉₀) and 10 mL of an aqueous solution of 1.0 mg/mL graphene oxide (GO) including 20 mM of KOH were mixed, and the mixture was stirred at 40 °C for 12 hours. Thereafter, unreacted nanoparticles were removed by centrifugation at 12,000 rpm (14,811 xg) for 30 minutes, and precipitated dendrimer-encapsulated platinum-palladium nanoparticle-graphene oxide composites (G6-NH₂(Pt)₉₀(Pd)₉₀/GO) were obtained and redispersed in 20 mL of distilled water.

### Example 7: Synthesis of hydrogen production reaction catalyst composite

Hydrogen production reaction catalyst composite G6-NH₂(Pt)₅₅₀/GO was synthesized as follows.

HCl was added to 1 µM of an aqueous solution of amine-terminated 6th generation polyamidoamine dendrimer (G6-NH₂) and the pH was set to 5.0. At this time, N₂ purging was performed together, and N₂ purging was continued until the reaction was finished. 10 mM Cu(NO₃)₂ aqueous solution corresponding to 50 equivalents of G6-NH₂ was added to G6-NH₂ aqueous solution having a pH of 5.0, and then copper ions were complexed inside the dendrimer by stirring while performing N₂ purging at room temperature for 30 minutes. A galvanic exchange reaction was induced by adding 100 mM K₂PtCl₄ aqueous solution corresponding to 550 equivalents of G6-NH₂, immediately followed by adding 100 mM NaBH₄ aqueous solution, which is a reducing agent having the same equivalents as Pt. Thereafter, a solution of dendrimer-encapsulated platinum nanoparticles (G6-NH₂(Pt)₅₅₀) was obtained by additional stirring for 10 minutes. The resulting solution was dialyzed (MWCO 12,000) in a pH 3.0 solution to remove impurities, and dendrimer-encapsulated platinum nanoparticles (G6-NH₂(Pt)₅₅₀) were obtained.

10 mL of a 1 µM aqueous solution of dendrimer-encapsulated platinum nanoparticles (G6-NH₂(Pt)₅₅₀) having acidity and 10 mL of an aqueous solution of 1.0 mg/mL graphene oxide (GO) including 20 mM of KOH were mixed, and the mixture was stirred at 40 °C for 12 hours. Thereafter, unreacted nanoparticles were removed by centrifugation at 12,000 rpm (14,811 xg) for 30 minutes, and precipitated dendrimer-encapsulated platinum nanoparticle-graphene oxide composites (G6-NH₂(Pt)₅₅₀/GO) were obtained and redispersed in 20 mL of distilled water.

### Comparative Examples 1-2

G6-OH(Pt)₁₈₀ and G6-OH(Pd)₁₈₀ were synthesized as follows.

180 molar equivalents of 100 mM K₂PtCl₄ aqueous solution (Comparative Example 1) or 180 molar equivalents of 100 mM K₂PdCl₄ aqueous solution (Comparative Example 2) were added to 2 µM of an aqueous solution of 6th generation polyamidoamine dendrimer (G6-OH). The solution was stirred for 72 hours to complex Pt²⁺ precursor ions or Pd²⁺ precursor ions with the internal tertiary amine of G6-OH. Thereafter, a 10-fold excess of NaBH₄ was added to a solution of Pt²⁺/G6-OH composite (G6-OH(Pt²⁺)₁₈₀) or Pd²⁺/G6-OH composite (G6-OH(Pd²⁺)₁₈₀), and the solution was stored in a sealed vial under stirring for 24 hours to produce a solution of BH₄⁻ reduced dendrimer-encapsulated platinum nanoparticles (G6-OH(Pt)₁₈₀) or dendrimer-encapsulated palladium nanoparticles (G6-OH(Pd)₁₈₀). The resulting solution was dialyzed for 2 days using a nylon membrane filter to remove impurities, and dendrimer-encapsulated platinum nanoparticles (G6-OH(Pt)₁₈₀) or dendrimer-encapsulated palladium nanoparticles (G6-OH(Pd)₁₈₀) were obtained.

### Comparative Example 3

A mixture of G6-OH(Pt)₉₀ and G6-OH(Pd)₉₀ was prepared as follows.

90 molar equivalents of each of K₂PtCl₄ aqueous solution and K₂PdCl₄ aqueous solution were mixed to an aqueous solution of polyamidoamine dendrimer (G6-OH), reduced with an excess amount of NaBH₄, and dialyzed to obtain dendrimer-encapsulated platinum nanoparticles (G6-OH(Pt)₁₈₀) and dendrimer-encapsulated palladium nanoparticles (G6-OH(Pd)₁₈₀). Thereafter, they were physically mixed to obtain a mixture of dendrimer-encapsulated platinum nanoparticles (G6-OH(Pt)₁₈₀) and dendrimer-encapsulated palladium nanoparticles (G6-OH(Pd)₁₈₀).

### Comparative Example 4

G6-NH₂(Pt)₁₈₀/GO was synthesized as follows.

HCl was added to 10 µM of an aqueous solution of amine-terminated 6th generation polyamidoamine dendrimer (G6-NH₂) and the pH was set to 5.0 or less. 100 mM K₂PtCl₄ (Pt²⁺) aqueous solution corresponding to 180 equivalents of G6-NH₂ was added to the G6-NH₂ aqueous solution having a pH of 5.0 or less, and the mixture was stirred at room temperature for 76 hours. Thereafter, 2 M NaBH₄ aqueous solution corresponding to 20 equivalents of Pt²⁺ was added, and the pH was set to 7 or less using an HCl aqueous solution. Pt²⁺ was reduced for 24 hours to produce a solution of dendrimer-encapsulated platinum nanoparticles (G6-NH₂(Pt)₁₈₀). The resulting solution was dialyzed (MWCO 12,000) in distilled water for 24 hours to remove impurities, and dendrimer-encapsulated platinum nanoparticles (G6-NH₂(Pt)₁₈₀) were obtained.

10 mL of a 1 µM aqueous solution of dendrimer-encapsulated platinum nanoparticles (G6-NH₂(Pt)₁₈₀) and 10 mL of an aqueous solution of 1.0 mg/mL graphene oxide (GO) including 20 mM of KOH were mixed, and the mixture was stirred at 40 °C for 12 hours. Thereafter, unreacted dendrimer-encapsulated platinum nanoparticles were removed by centrifugation at 12,000 rpm (14,811 xg) for 30 minutes, and precipitated dendrimer-encapsulated platinum nanoparticle-graphene oxide composites (G6-NH₂(Pt)₁₈₀/GO) were obtained and redispersed in 20 mL of distilled water.

### Comparative Example 5

G6-NH₂(Pt)₅₅₀/CB was synthesized as follows.

Dendrimer-encapsulated platinum nanoparticles (G6-NH₂(Pt)₅₅₀) were synthesized in the same manner as in Example 7, and then mixed with carbon black (CB, Vulcan^{®}carbon) to obtain dendrimer-encapsulated platinum nanoparticle-carbon black composites (G6-NH₂(Pt)₅₅₀/CB).

### Experimental Example 1: Shape and particle size distribution analysis of DENs

In order to observe the shape of the dendrimer-encapsulated nanoparticles (DENs) of Examples 1~5 and Comparative Examples 1~2, and measure the size distribution, transmission electron microscope (TEM) images were taken using JEM-3010 (JEOL) driven at 300 kV.

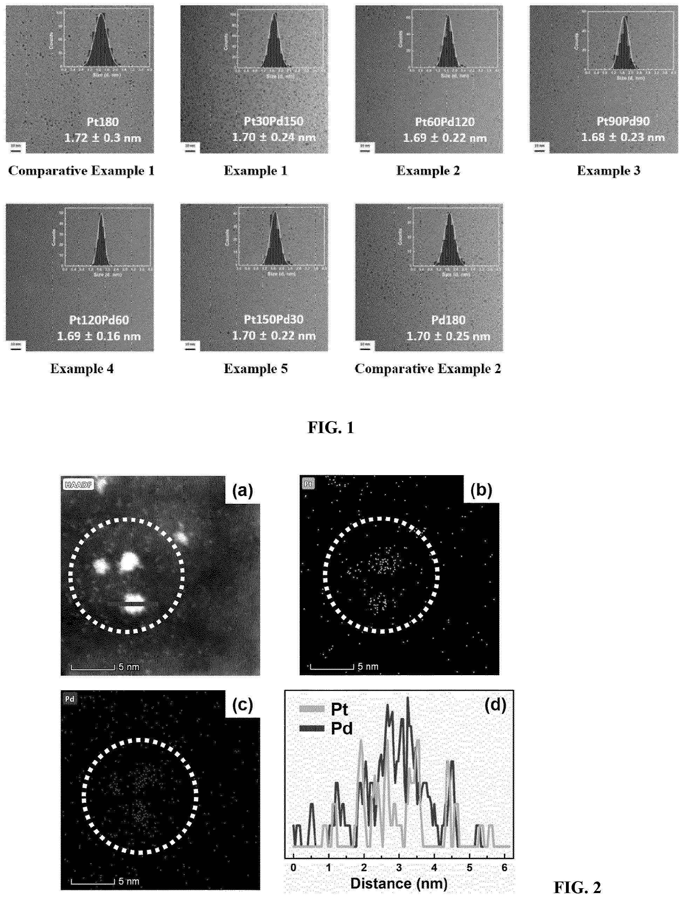

Fig. 1 is a TEM image and a particle size distribution histogram of dendrimer-encapsulated nanoparticles of Examples 1~5 and Comparative Examples 1~2.

Referring to Fig. 1, it may be confirmed that dendrimer-encapsulated nanoparticles of different compositions are all spherical, and do not aggregate with each other, and thus have a monodispersed average particle size of 1.65~1.75 nm.

### Experimental Example 2: Component distribution analysis of DENs

In order to confirm the component distribution of the dendrimer-encapsulated nanoparticles (DENs) of Example 3, elemental analysis was performed using an FEI Titan Themis 300 (Thermo Scientific) provided with a Super-X EDS system driven at 300 kV. EDS samples were prepared on 200 mesh nickel grids (Ted Pella Inc.) coated with a carbon film.

Fig. 2a is a high angle annular dark field-scanning transmission electron microscopy (HAADF-STEM) image of the dendrimer-encapsulated nanoparticles of Example 3. Figs. 2b and 2c are STEM-energy dispersive X-ray spectroscopy elemental mapping images (STEM-EDS) of Pt and Pd atoms. Fig. 2d is a line profile analysis result along the line marked on the single particle of Fig. 2a.

Referring to Fig. 2, it may be confirmed that the dendrimer-encapsulated platinum-palladium nanoparticles according to an embodiment of the present invention are single particles where platinum atoms and palladium atoms are uniformly distributed, but palladium tends to be distributed relatively in the center of the particles.

### Experimental Example 3: Component ratio analysis of DENs

In order to analyze the ratio of platinum (Pt) and palladium (Pd), which are components included in the dendrimer-encapsulated nanoparticles (DENs) of Examples 1~5 and Comparative Examples 1~2, an X-ray photoelectron spectroscopy (XPS) spectrum was obtained using K-Alpha X-ray photoelectron spectrometer (Thermo Scientific) which uses Al Kα radiation (hv = 1486.6 eV)). In order to correct sample charging, the XPS peak position was referenced to C Is at 284.4 eV. XPS samples were obtained by adding a few drops of DENs aqueous solution on a silicon wafer and then drying in air. Inductively coupled plasma-atomic emission spectroscopy (ICP-AES) analysis was performed using Optima 8300 (Perkin Elmer). In order to measure ICP-AES, all samples were dissolved in an aqua regia solution using a TOPEX microwave digestion system (PreeKem).

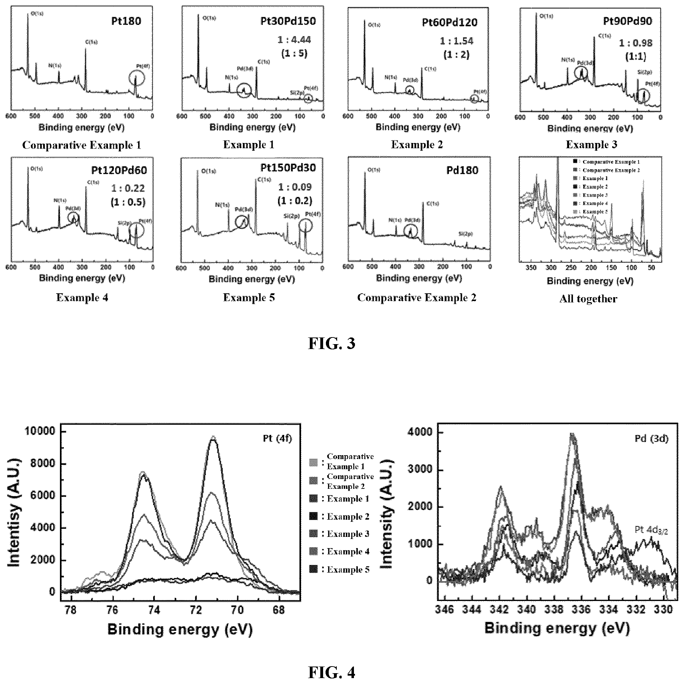

Fig. 3 illustrates XPS spectrums of the dendrimer-encapsulated nanoparticles of Examples 1~5 and Comparative Examples 1~2. Fig. 4 illustrates XPS spectrums in the Pt(4f) region and Pd(3d) region.

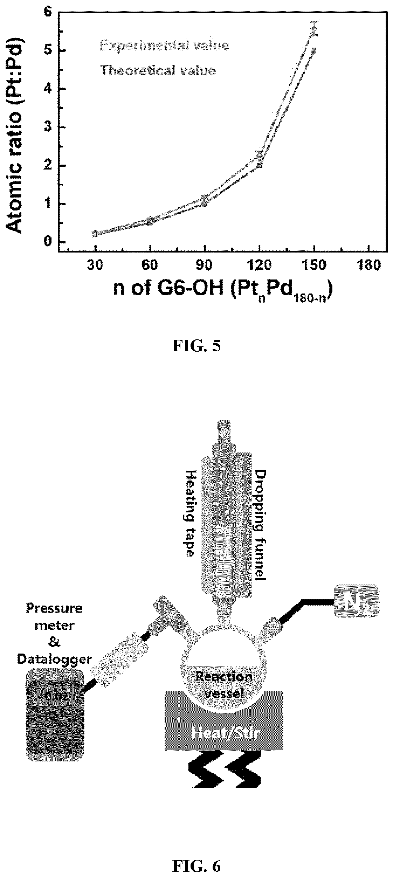

Fig. 5 is a result of measuring the content ratio of platinum and palladium with respect to the dendrimer-encapsulated platinum-palladium nanoparticles of Examples 1~5 using ICP-AES.

Table 1 below shows the content ratio of Pt and Pd inside the dendrimer-encapsulated nanoparticles of Examples 1~5 and Comparative Examples 1~2 calculated from the XPS spectrums, and compares the content ratio with theoretical ratio.

**[Table 1]**

| | Atomic fraction | | Theoretical atomic fraction (%) | |
|---|---|---|---|---|
| | Pt (%) | Pd (%) | Pt (%) | Pd (%) |
| Comparative Example 1: Pt₁₈₀ | 100 | 0 | 100 | 0 |
| Example 1: Pt₃₀ Pd₁₅₀ | 25.6±10.3 | 74.4±8.9 | 16.7 | 83.3 |
| Example 2: Pt₆₀ Pd₁₂₀ | 38.4±1.3 | 61.6±0.9 | 25 | 75 |
| Example 3: Pt₉₀ Pd₉₀ | 58.2±10.9 | 41.8±7.7 | 50 | 50 |
| Example 4: Pt₁₂₀ Pd₆₀ | 83.8±2.7 | 16.2±1.9 | 75 | 25 |
| Example 5: Pt₁₅₀ Pd₃₀ | 92.3±1.5 | 7.7±1.2 | 83.3 | 16.7 |
| Comparative Example 2: Pd₁₈₀ | 0 | 100 | 0 | 100 |

Referring to Figs. 3 and 4, the ratio of Pt and Pd in each of the dendrimer-encapsulated nanoparticles may be confirmed. Pt and Pd each show two pairs of peaks, so it may be understood that 6G-OH(Pt)ₙ(Pd)₁₈₀₋ₙ has each metal atom partially reduced to have two oxidation states (Pt⁰, Pt²⁺, Pd⁰, Pd²⁺).

Referring to Fig. 5 and Table 1, the atomic fraction of Pt was relatively high, and the atomic fraction of Pd was relatively low, compared to the theoretically predicted values.

### Experimental Example 4: Catalytic activity evaluation of DENs

In order to investigate the catalytic action of ammonia borane (AB, NH₃BH₃) hydrolytic dehydrogenation, which changes depending on the composition of platinum (Pt) and palladium (Pd) in the dendrimer-encapsulated nanoparticles (DENs), the catalytic activity of the dendrimer-encapsulated nanoparticles of Examples 1~5 and Comparative Examples 1~3 was evaluated.

Hydrolytic dehydrogenation of AB was performed using a laboratory built-in dehydrogenation device equipped with an Extech SDL700 manometer (Extech Instruments) at 25°C. Fig. 6 illustrates the dehydrogenation device. The device comprises a 100 mL three-necked round-bottom flask. The first neck of the flask was connected to the N₂ tank through a three-way stopcock made of glass. The second neck of the flask was attached to the dropping funnel used for reagent addition, and the third neck was sealed to a pressure transducer (Extech) to record the pressure of hydrogen gas in real time. Before the hydrolytic dehydrogenation reaction, 2 mL of 2 µM dendrimer-encapsulated nanoparticles prepared in Examples 1~5 and Comparative Examples 1~3 was put in a round-bottom flask containing a magnetic stir bar. The catalyst content was adjusted to a total of 400 nM. Thereafter, the reaction system was purged with N₂ gas for 3 minutes. After checking that the reaction temperature was kept constant at 25°C, 8 mL of AB aqueous solution (31.25 mM) was added so that the content of AB was 25 mM using a dropping funnel under vigorous stirring (1,200 rpm), and the hydrolytic dehydrogenation of AB was initiated. The amount of hydrogen gas produced was measured by monitoring the pressure increase inside the flask between dehydrogenation reactions. The pressure of hydrogen gas was recorded every second in a measurable range up to 30 psi using a manometer connected to a PT30 pressure transducer (Extech Instruments).

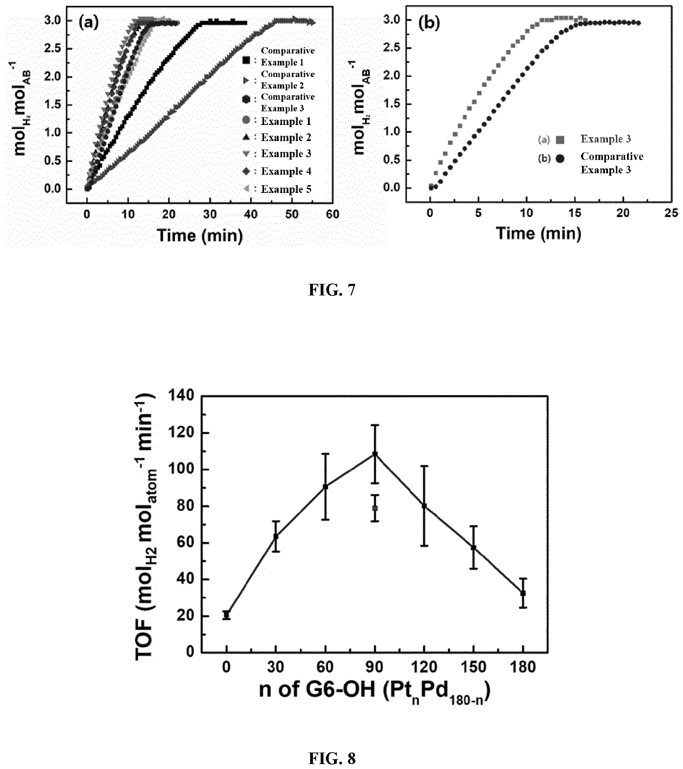

Fig. 7a illustrates a time-dependent hydrogen production from the AB aqueous solution of the dendrimer-encapsulated nanoparticles of Examples 1~5 and Comparative Examples 1~3, and Fig. 7b illustrates a time-dependent hydrogen production from the AB aqueous solution of G6-OH(Pt)₉₀(Pd)₉₀ of Example 3 and a physical mixture of G6-OH(Pt)₁₈₀ and G6-OH(Pd)₁₈₀ of Comparative Example 3.

Referring to Fig. 7, in the presence of dendrimer-encapsulated nanoparticles, hydrogen production started immediately upon adding AB to the experiment vessel, and continued almost linearly until 3 equivalents of hydrogen were produced per 1 mole of AB (i.e., until all the added AB was consumed). The results mean that the dendrimer-encapsulated nanoparticles have very strong activity for the hydrolysis of AB. For example, in the presence of G6-OH(Pt)₉₀(Pd)₉₀, catalytic hydrolysis of AB was completed within about 10 minutes (molar ratio of Pt+Pd atoms to AB=1.6×10⁻⁶).

The turnover frequency (TOF) of the hydrogen production reaction using the dendrimer-encapsulated nanoparticle catalyst was calculated from the initial rate of hydrogen production in the initial reaction period (i.e., the period in which the conversion rate of AB is 0~33%).

Fig. 8 illustrates a change in TOF value of the dendrimer-encapsulated nanoparticles of the same size of Examples 1~5 and Comparative Examples 1~2 as a function of the Pt and Pd ratios. The dots not connected in Fig. 8 are data for Comparative Example 3, which is a physical mixture of G6-OH(Pt)₁₈₀ and G6-OH(Pd)₁₈₀. The TOF value showed a strong dependence on the composition of Pt and Pd in nanoparticles of the same size.

Table 2 below shows the TOF values of the dendrimer-encapsulated nanoparticles of Examples 1~5 and Comparative Examples 1~3.

**[Table 2]**

| | Comparative Example 1 | Example 1 | Example 2 | Example 3 | Example 4 | Example 5 | Comparative Example 2 | Comparative Example 3 |
|---|---|---|---|---|---|---|---|---|
| Cat. | Pt₁₈₀ | Pt₃₀Pd₁₅₀ | Pt₆₀Pd₁₂₀ | Pt₉₀Pd₉₀ | Pt₁₂₀Pd₆₀ | Pt₁₅₀Pd₃₀ | Pd₁₈₀ | Pt₉₀+Pd₉₀ |
| TOF | 32.5±7.9 | 63.5±8.3 | 90.6±18.0 | 108.5±15.9 | 80.2±21.7 | 57.4±11.5 | 20.5±2.1 | 79.0±7.2 |

Referring to Fig. 8 and Table 2, the catalyst of Example 3 comprising nanoparticles of Pt₉₀Pd₉₀ showed the highest catalytic activity with a TOF value of 108.5±15.9 mol_{H2}mol⁻¹ₐₜₒₘmin⁻¹, which is improved over the catalyst of Comparative Example 3 having a TOF value of 79.0±7.2 mol_{H2}mol⁻¹ₐₜₒₘmin⁻¹ with the same composition under the same reaction conditions. In addition, the catalyst of Comparative Example 1 comprising the single metal Pt₁₈₀ showed higher catalytic activity than the catalyst of Comparative Example 2 comprising the single metal Pd₁₈₀. However, the catalyst of Example 2 comprising the two metals Pt₆₀Pd₁₂₀ having a high Pd content compared to Pt showed higher catalytic activity than the catalyst of Example 4 comprising the two metals Pt₁₂₀Pd₆₀ having a low Pd content compared to Pt. Thus, it may be understood that the catalytic activity may be improved by interaction according to bimetallization of platinum and palladium, i.e., systematic combination of the two.

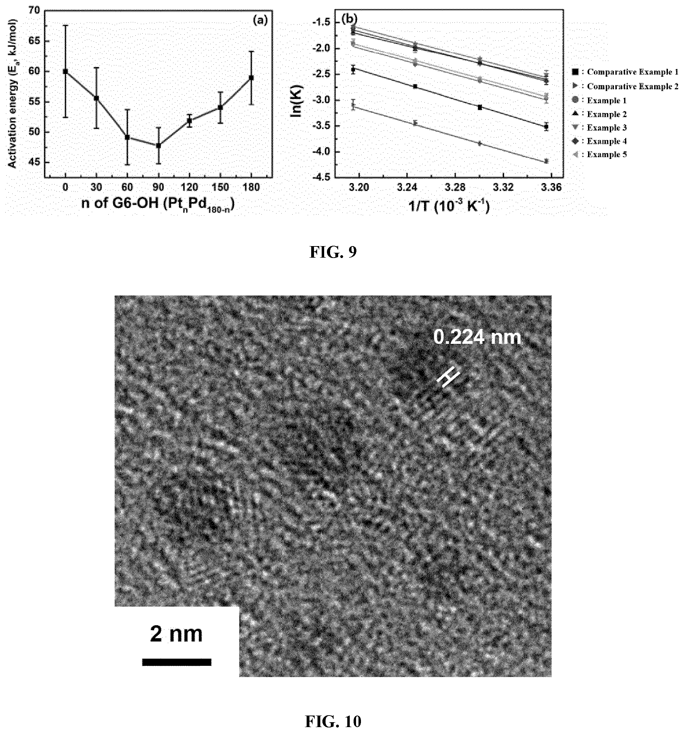

Fig. 9a and Table 3 below calculate activation energy (Eₐ) when using the catalysts of Examples 1~5 and Comparative Examples 1~2 from the hydrolysis reaction of AB described above, and Fig. 9b illustrates the rate constant K according to the temperature of the catalysts of Examples 1~5 and Comparative Examples 1~2 according to the Arrhenius formula.

**[Table 3]**

| | Comparative Example 1 | Example 1 | Example 2 | Example 3 | Example 4 | Example 5 | Comparative Example 2 |
|---|---|---|---|---|---|---|---|
| Cat. | Pt₁₈₀ | Pt₃₀Pd₁₅₀ | Pt₆₀Pd₁₂₀ | Pt₉₀Pd₉₀ | Pt₁₂₀Pd₆₀ | Pt₁₅₀Pd₃₀ | Pd₁₈₀ |
| Ea | 58.9±4.4 | 55.6±5.0 | 49.1±4.5 | 47.8±3.0 | 51.9±1.0 | 54.0±2.6 | 60.0±7.6 |

Referring to Fig. 9 and Table 3, the catalyst of Example 3 showed the lowest activation energy of 47.8±3.0 kJ/mol, and the catalyst of Example 2 showed the next lowest activation energy of 49.1±4.5 kJ/mol, which is similar to the above-described catalytic activity. However, the catalyst of Example 1 showed a higher TOF value compared to the catalyst of Example 5, and thus had excellent catalytic activity, but the activation energy of the catalyst of Example 5 was lower than that of the catalyst of Example 1. This may be because the interaction between Pt and Pd affects the number of contacts between the catalyst and the reactant.

### Experimental Example 5: Lattice parameter measurement of DENs

In order to measure the lattice parameter of the dendrimer-encapsulated nanoparticles of Example 3, high-resolution transmission electron microscopy (HRTEM) images were taken.

Fig. 10 is an HRTEM image of the dendrimer-encapsulated nanoparticles of Example 3.

Referring to Fig. 10, it may be confirmed that the lattice parameter of the dendrimer-encapsulated nanoparticles of Example 3 is 0.224 nm.

### Experimental Example 6: Shape and particle size distribution analysis of DENs/GO

In order to observe the shape of the dendrimer-encapsulated nanoparticle-graphene oxide composites (DENs/GO) of Examples 6~7 and Comparative Example 4, and measure the size distribution of the dendrimer-encapsulated nanoparticles on graphene oxide, UV-Vis absorption spectrum was measured, and transmission electron microscope (TEM) images were taken using JEM-3010 (JEOL) driven at 300 kV.

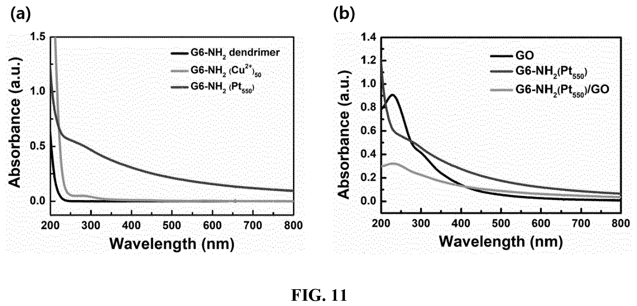

Figs. 11a and 11b illustrate UV-Vis spectrums of the process of synthesizing dendrimer-encapsulated platinum nanoparticles (G6-NH₂(Pt)₅₅₀) and dendrimer-encapsulated platinum nanoparticle-graphene oxide composite (G6-NH₂(Pt)₅₅₀/GO) of Example 7.

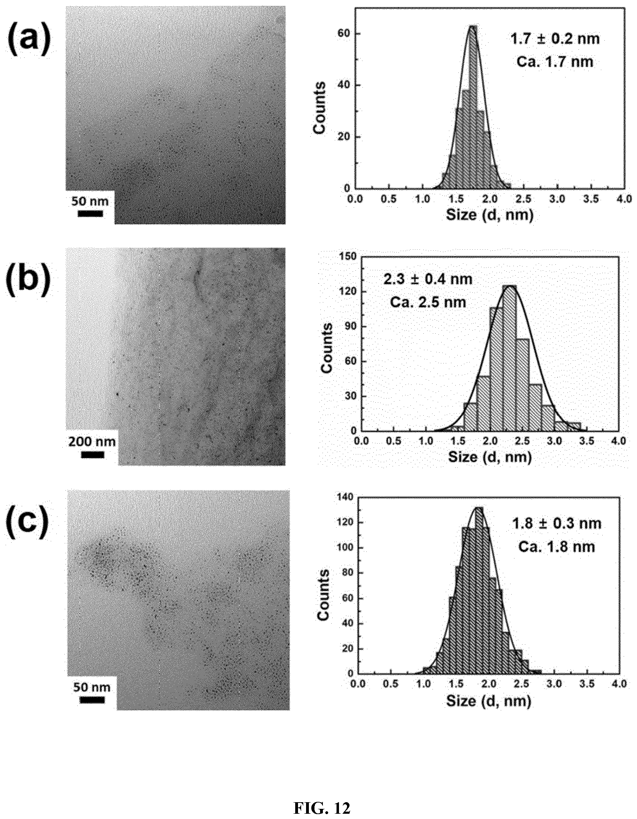

Figs. 12a, 12b, and 12c are TEM images of the dendrimer-encapsulated nanoparticle-graphene oxide composites of Examples 6, 7, and Comparative Example 4, respectively, and histograms of the particle size distribution of the dendrimer-encapsulated nanoparticles on graphene oxide.

Table 4 below compares the particle size distribution measurement results of the dendrimer-encapsulated nanoparticles on the dendrimer-encapsulated nanoparticle-graphene oxide composites of Examples 6 to 7 and Comparative Example 4 with the theoretical particle size.

**[Table 4]**

| | Example 6 | Example 7 | Comparative Example 4 |
|---|---|---|---|
| Particle size distribution measurement value | 1.7±0.2 nm | 2.3±0.4 nm | 1.8±0.3 nm |
| Theoretical particle size | 1.7 nm | 2.5 nm | 1.8 nm |

Referring to Figs. 11 and 12, and Table 4, it may be confirmed that the dendrimer-encapsulated nanoparticles were uniformly dispersed and fixed on the graphene oxide surface, and even after the dendrimer-encapsulated nanoparticle-graphene oxide composite was formed, the size of the dendrimer-encapsulated nanoparticles did not change and did not show any difference from the theoretical particle size.

### Experimental Example 7: Catalytic activity evaluation of DENs/GO

In order to investigate the catalytic action of ammonia borane (AB, NH₃BH₃) hydrolytic dehydrogenation, which changes depending on whether the dendrimer-encapsulated nanoparticles are supported on graphene oxide, the catalytic activity of the dendrimer-encapsulated nanoparticle-graphene oxide composites and the dendrimer-encapsulated nanoparticles before being supported on graphene oxide of Examples 6~7 and Comparative Example 4 was evaluated and compared in the same manner as in Experimental Example 4 described above. The molar ratio of Pt atoms to AB is 0.001 (Pt atom:AB = 25 µM:25 mM).

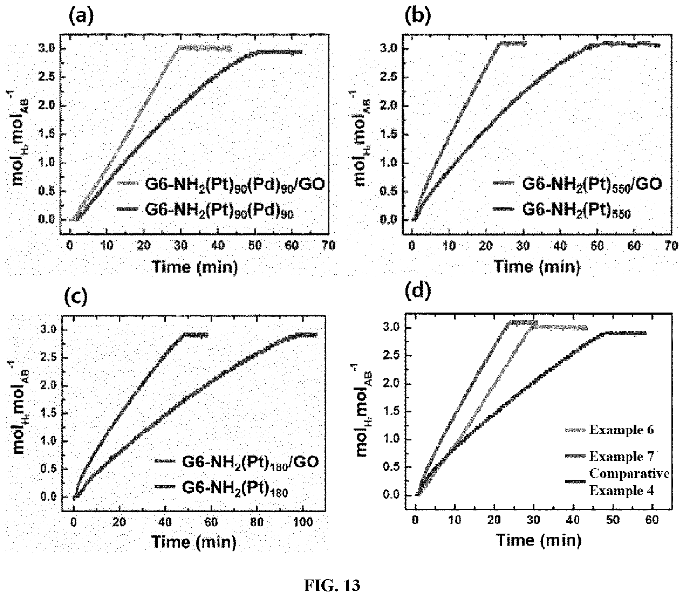

Figs. 13a, 13b, and 13c illustrate a time-dependent hydrogen production from the AB aqueous solution before and after supporting the dendrimer-encapsulated nanoparticles of Examples 6, 7, and Comparative Example 4 on graphene oxide, respectively, and Fig. 13d is a graph comparing the time-dependent hydrogen production from the AB aqueous solution of the dendrimer-encapsulated nanoparticle-graphene oxide composites of Examples 6, 7 and Comparative Example 4.

Referring to Fig. 13a to 13c, in the presence of the dendrimer-encapsulated nanoparticle-graphene oxide composite, hydrogen production started immediately upon adding AB to the experiment vessel, and continued almost linearly until 3 equivalents of hydrogen were produced per 1 mole of AB (i.e., until all the added AB was consumed). The results mean that the dendrimer-encapsulated nanoparticle-graphene oxide composite has very strong activity for the hydrolysis of AB.

AB hydrolysis in the presence of the dendrimer-encapsulated nanoparticle-graphene oxide composite was performed at a higher rate than the hydrolysis in the presence of the dendrimer-encapsulated nanoparticles before being supported on graphene oxide. The results mean that the catalytic activity was stronger when supporting the nanoparticles on graphene oxide.

Referring to Fig. 13d, the dendrimer-encapsulated nanoparticle-graphene oxide composites of Examples 6 and 7 showed a stronger catalytic activity than the dendrimer-encapsulated nanoparticle-graphene oxide composite of Comparative Example 4. The results mean that the catalytic activity was improved when comprising Pt and Pd atoms as a bimetallic metal structure compared to when comprising Pt as a single metal, and the higher the equivalents of metal nanoparticles comprised, the better the catalytic activity.

The turnover frequency (TOF) of the hydrogen production reaction using the dendrimer-encapsulated nanoparticle catalyst before and after being supported on graphene oxide was calculated from the initial rate of hydrogen production in the initial reaction period (i.e., the period in which the conversion rate of AB is 0~33%).

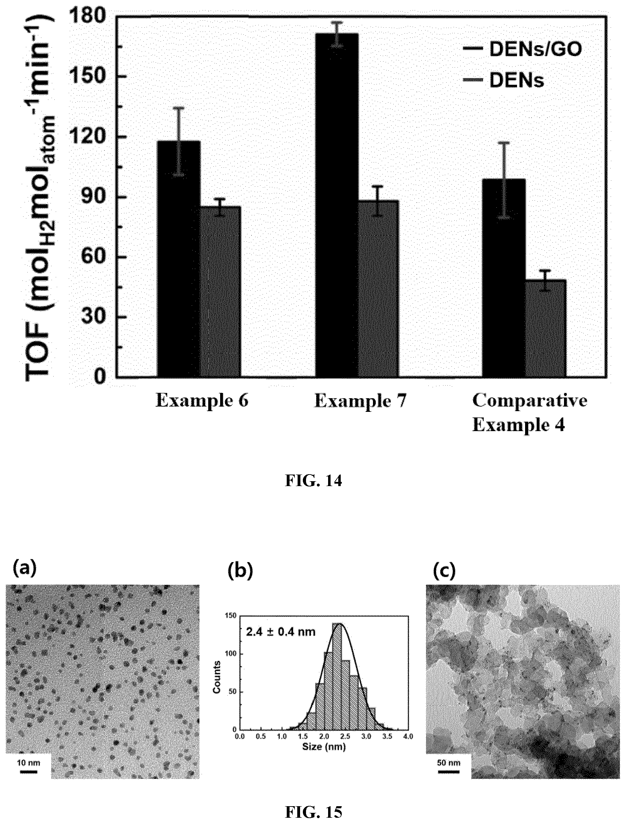

Fig. 14 illustrates changes in the turnover frequency (TOF) values of the dendrimer-encapsulated nanoparticles before and after being supported on graphene oxide of Examples 6, 7, and Experimental Example 4.

Referring to Fig. 14, the dendrimer-encapsulated nanoparticle-graphene oxide composite showed a higher TOF value than the dendrimer-encapsulated nanoparticles before being supported on graphene oxide. The results mean that the catalytic activity was stronger when supporting the nanoparticles on graphene oxide. In addition, the dendrimer-encapsulated nanoparticle-graphene oxide composites of Examples 6 and 7 showed a stronger catalytic activity than the dendrimer-encapsulated nanoparticle-graphene oxide composite of Comparative Example 4. The results mean that the catalytic activity was improved when comprising Pt and Pd atoms as a bimetallic metal structure compared to when comprising Pt as a single metal, and the higher the equivalents of metal nanoparticles comprised, the better the catalytic activity.

### Experimental Example 8: Catalytic activity evaluation according to support type

In order to investigate the catalytic action of ammonia borane (AB, NH₃BH₃) hydrolytic dehydrogenation, which changes depending on the type of support of the dendrimer-encapsulated nanoparticles, the catalytic activity of the dendrimer-encapsulated nanoparticle-support composites of Example 7 and Comparative Example 5 was evaluated in the same manner as in Experimental Example 4. The molar ratio of Pt atoms to AB is 0.001 (Pt atom:AB = 25 µM:25 mM).

Figs. 15a and 15b are TEM images and particle size distribution histograms of dendrimer-encapsulated platinum nanoparticles (G6-NH₂(Pt)₅₅₀) before being supported, and Fig. 15c is a TEM image of dendrimer-encapsulated platinum nanoparticle-carbon black composite (G6-NH₂(Pt)₅₅₀/CB) of Comparative Example 5.

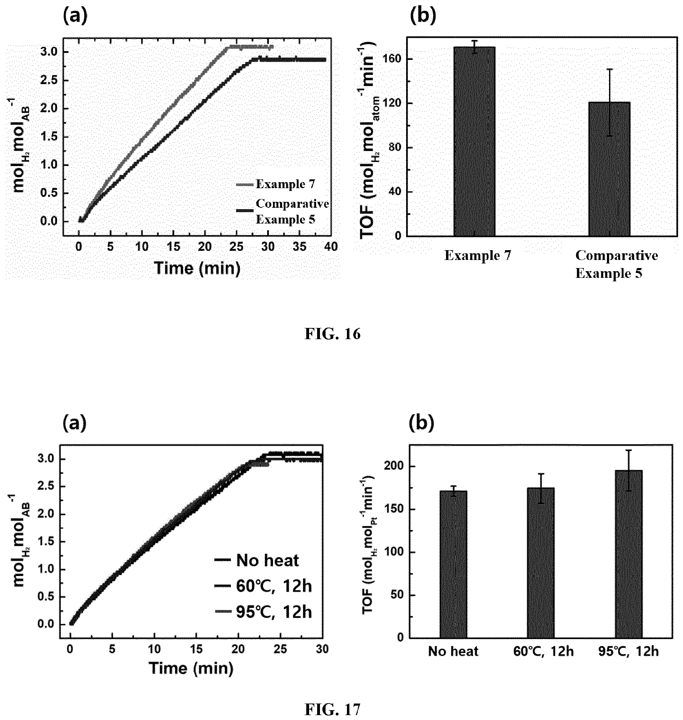

Figs. 16a and 16b are graphs comparing the time-dependent hydrogen production and the change in turnover frequency (TOF) values of the dendrimer-encapsulated nanoparticle-support composites of Example 7 and Comparative Example 5.

Referring to Fig. 16a, the catalytic hydrolysis of AB in the presence of the dendrimer-encapsulated nanoparticle-graphene oxide composite of Example 7 supported on graphene oxide (GO) was performed at a higher rate than the hydrolysis in the presence of the dendrimer-encapsulated nanoparticle-carbon black composite of Comparative Example 5 supported on carbon black. The results mean that the catalytic activity was stronger when supporting the nanoparticles on graphene oxide than when using carbon black as a catalyst support.

Referring to Fig. 16b, the dendrimer-encapsulated nanoparticle-graphene oxide composite of Example 7 showed a higher TOF value than the dendrimer-encapsulated nanoparticle-carbon black composite of Comparative Example 5. The results mean that the catalytic activity was stronger when supporting the nanoparticles on graphene oxide than when using carbon black as a catalyst support.

### Experimental Example 9: Thermal stability evaluation of DENs/GO

In order to evaluate the thermal stability of the dendrimer-encapsulated nanoparticle-graphene oxide composites, the dendrimer-encapsulated nanoparticle-graphene oxide composite of Example 7 was treated at 60°C or 95°C for 12 hours, respectively, and then the catalytic action of mmonia borane (AB, NH₃BH₃) hydrolytic dehydrogenation was evaluated. The dendrimer-encapsulated nanoparticle-graphene oxide composite not subjected to heat treatment was used as a control. The molar ratio of Pt atoms to AB is 0.001 (Pt atom:AB = 25 µM:25 mM).

Fig. 17a is a graph comparing the time-dependent hydrogen production according to the heat treatment of the dendrimer-encapsulated nanoparticle-graphene oxide composite of Example 7, and Fig. 17b is a graph comparing the change in turnover frequency (TOF) values according to the heat treatment of the dendrimer-encapsulated nanoparticle-graphene oxide composite of Example 7.

Referring to Figs. 17a and 17b, it was confirmed that the dehydrogenation catalytic activity of AB was maintained even after heat treatment at 60°C or 95°C. The results mean that the dendrimer-encapsulated nanoparticle-graphene oxide composite exhibits thermal stability and may act as a catalyst even after heat treatment.

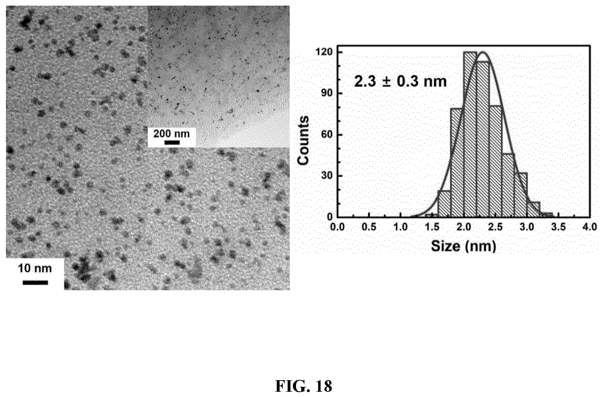

Fig. 18 is a TEM image and a particle size distribution histogram of the dendrimer-encapsulated nanoparticle-graphene oxide composite of Example 7 after heat treatment at 60°C for 12 hours.

Referring to Fig. 18, no change in the size of the dendrimer-encapsulated nanoparticles was observed even after heat treatment, and thus it may be confirmed that a stable structure is maintained.

The foregoing description of the present invention has been presented for illustrative purposes, and it is apparent to a person having ordinary skill in the art that the present invention can be easily modified into other detailed forms without changing the technical idea or essential features of the present invention. Therefore, it should be understood that the forgoing embodiments are by way of example only, and are not intended to limit the present disclosure. For example, each component which has been described as a unitary part can be implemented as distributed parts. Likewise, each component which has been described as distributed parts can also be implemented as a combined part.

The scope of the present invention is presented by the accompanying claims, and it should be understood that all changes or modifications derived from the definitions and scopes of the claims and their equivalents fall within the scope of the present invention.

## Claims

1. A hydrogen production reaction catalyst reducing the activation energy of hydrogen production reaction, the hydrogen production reaction catalyst comprising: a dendrimer and nanoparticles encapsulated in the dendrimer, wherein the nanoparticles are made of an alloy of platinum and palladium.

2. The hydrogen production reaction catalyst of claim 1, wherein the dendrimer is a hydroxyl-terminated polyamidoamine dendrimer.

3. The hydrogen production reaction catalyst of claim 1, wherein the total molar equivalents of the nanoparticle component are 16~1024 equivalents based on 1 equivalent of the dendrimer.

4. The hydrogen production reaction catalyst of claim 1, wherein the average particle size of the nanoparticles is 1.0~3.5 nm.

5. The hydrogen production reaction catalyst of claim 4, wherein the average particle size of the nanoparticles shows a monodispersity of 1.65~1.75 nm.

6. The hydrogen production reaction catalyst of claim 1, wherein the molar ratio of the platinum and the palladium is 1~5:5~1,respectively.

7. The hydrogen production reaction catalyst of claim 6, wherein the molar ratio of the platinum and the palladium is 1~2:2~1, respectively.

8. The hydrogen production reaction catalyst of claim 1, wherein the turnover frequency (TOF) of the hydrogen production reaction using the catalyst is 50 mol_{H2}molₐₜₒₘ⁻¹min⁻¹ or more.

9. The hydrogen production reaction catalyst of claim 1, wherein the catalyst reduces the activation energy of the hydrogen production reaction to 57.5 kJ/mol or less.

10. The hydrogen production reaction catalyst of any one of claims 1 to 9, wherein the hydrogen production reaction is a hydrolytic dehydrogenation reaction of ammonia borane.

11. A hydrogen production reaction catalyst composite reducing the activation energy of hydrogen production reaction, the hydrogen production reaction catalyst composite comprising: a carbon-based support and a catalyst supported on the carbon-based support, wherein the catalyst comprises: a dendrimer and nanoparticles encapsulated in the dendrimer, wherein the nanoparticles are made of platinum, palladium or an alloy of platinum and palladium.

12. The hydrogen production reaction catalyst composite of claim 11, wherein the dendrimer is an amine-terminated polyamidoamine dendrimer.

13. The hydrogen production reaction catalyst composite of claim 11, wherein the total molar equivalents of the nanoparticle component are 16~1024 equivalents based on 1 equivalent of the dendrimer.

14. The hydrogen production reaction catalyst composite of claim 11, wherein the average particle size of the nanoparticles is 1.0~3.5 nm.

15. The hydrogen production reaction catalyst composite of claim 11, wherein the carbon-based support is chemically converted graphenes (CCGs).

16. The hydrogen production reaction catalyst composite of claim 15, wherein the carbon-based support is graphene oxide or reduced graphene oxide.

17. The hydrogen production reaction catalyst composite of claim 11, wherein the molar ratio of the platinum and the palladium included in the alloy is 1~2:2~1, respectively.

18. The hydrogen production reaction catalyst composite of claim 11, wherein the turnover frequency (TOF) of the hydrogen production reaction using the catalyst composite is 90 mol_{H2}molₐₜₒₘ⁻¹min⁻¹ or more.

19. The hydrogen production reaction catalyst composite of claim 11, wherein the catalyst composite reduces the activation energy of the hydrogen production reaction to 57.5 kJ/mol or less.

20. The hydrogen production reaction catalyst composite of any one of claims 11 to 19, wherein the hydrogen production reaction is a hydrolytic dehydrogenation reaction of ammonia borane.
